# EUROPEAN PATENT APPLICATION

(11) **EP 1 531 086 A1**
(43) Date of publication of application: **18.05.2005**
(21) Application number: 04078118.9
(22) Date of filing: 12.11.2004
(51) Int. Cl.: B60R 11/00, A47B 67/04

(54) **Improved storage unit with drawers for vehicles and vessels with a flat cargo floor**

(30) Priority: 17.11.2003 NL 1024792
(71) Applicant: Beks, Petrus Wilhelmus Maria, 5552 BV Valkenswaard (NL)
(72) Inventor: Beks, Petrus Wilhelmus Maria, 5552 BV Valkenswaard (NL)

(57) **Abstract**

The improved storage unit (1) with drawers (2, 3, 4, 5, 6) is especially suited to be placed on the flat cargo floor (25) of all sorts of vessels and vehicles (24) for the storage of all kinds of tools, parts etc. which are needed to be within the reach of the user, but mentioned storage unit (1) is also very suitable to be used in a camper, in which the unit can be built up quickly and efficiently with rectangular portal frames (7, 8) placed in transversal direction with in between vertical raised bulkheads (17) and when top covering is applied it is constructed of one or more separate cover plates (9, 10, 11) glued with their edges to "chair" profiles (31) or "hook" profiles (32) and in which the drawers (2, 3, 4, 5, 6) can be divided freely and very flexibly at random with special drawer dividers (22, 23) punched out of a metal sheet and can be further pressed or bended in their shape, thus creating a surprisingly unique storage system.

## Description

The present invention relates to a storage unit executed as special unit with drawers that can be placed on a flat cargo floor of motor vehicles, mostly vans or station cars and such, in which the unit with drawers consist of a dismountable assembly of, in transversal direction placed rectangular portal frames with in between four vertical raised bulkheads in longitudinal direction, in which the sides are equipped with pick-up parts and guiding profiles, in which support roller elements and drawers can be locked or held in several extendable positions.

A somewhat similar storage device constructed as a universal horizontal storage unit, mainly for motor vehicles with a rear or side entrance, is known in the Dutch Patent document no. 1023660, submitted 13-06-2003 by one and the same applicant and inventor BEKS, Petrus, Wilhelmus Maria, Nieuwstraat 61, 5552 BV VALKENSWAARD, The Netherlands.

Subject is a universal horizontal storage unit, which can easily be mounted or dismounted on the flat cargo floor of a van, in which the storage unit consists of two rigid metal portal frames with between those, four vertical raised bulkheads in longitudinal direction, in which the top of the storage unit can be closed with a horizontal top cover equipped with lids, in which the vertical raised bulkheads are provided with guiding profiles for the drawers that move over a bearing roller element at the front side of the unit, the rear of the drawers are equipped with runner wheels (two), in which the drawer can be locked or held in several extended positions, and when closed, the drawers can be locked with, for example, a cylinder lock, in which this drawer unit is meant for storage of tools and parts of a skilled worker, but can also be used in a camper, and by using other drawers, can be converted into a camping storage unit.

The aim of the present invention is to provide an improved drawer unit in which the drawer guides are improved in such way that they enclose a rocker axle construction connected to the rear runner wheels of the drawer. The rocker axle construction has been equipped with anti tilting wheels (one on each side), which run underneath the flange of the guiding profiles, as result of which tilting of a fully pulled out drawer loaded with a considerable amount of weight will absolutely be prevented, in which the drawer can easily be held or locked in several extending positions, and furthermore the top covering has been improved ingeniously with regard to mounting and dismounting, in which the storage unit can also be executed as a single drawer unit in various heights, for instance 25 and 54 cm.

Therefore, a strongly improved storage unit with drawers according to the invention for use in vehicles and vessels with a flat cargo floor has been ingeniously further developed in such a way, characterized in that, the support of the above mentioned drawers in the unit is executed by means of specially constructed guiding profiles, steel pick-up parts, a front roller construction and rear runner wheels equipped with a rocker axle construction with anti tilting wheels, in which locking the drawers can be reached by using the locking bar underneath the drawer front, in which the exact specifications of the different types of construction materials as used for earlier mentioned guiding profiles, pick-up profiles, rollers, runner wheels, anti tilting wheels, and locking bars can be specifically adjusted as regards strength by using metal or plastic.

The advantage is that the aim of the present invention has been achieved in a very efficient and easy to assemble manner.

Further, the storage unit according to the invention has been further developed in such way, characterized in that, on top of the vertical raised bulkheads metal mounting profiles have been clamped for glueing onto the top covering parts per drawer, in which the extrusion profile has an inverted U-shape with an upright rim on one side in order to create a so called "chair" profile.

The advantage is a very easy top covering which can be put in place very quickly and easily, and can also be mounted and dismounted separately for each drawer unit.

Furthermore, the storage system according to the invention has been further developed in such way, characterized in that, on the side of the storage unit with drawers, on the above mentioned extruded "chair" profile an extruded "hook" profile with a glued side filler can be connected and furthermore a modified support profile has been attached for rigidly supporting the side filler.

The advantage is a professional side filler which can be connected very efficiently and quickly.

Furthermore, the storage system according to the invention has been further developed in such way, characterized in that, the mentioned guiding profiles are constructed as a U-shaped extrusion profile, in which the back of the U-shape is placed against the sides of the vertical bulkheads, in which a steel pick-up part has been equipped with notches and bends for guiding the mentioned rocker axle with anti tilting wheels.

The advantage is, that the anti tilting wheels run underneath the flange of the guiding profile in a very efficient way and besides that, these parts create a very reliable construction to prevent tilting of the drawer, yet allowing easy sliding of the drawer.

The preferred construction of the invention will be described by way of example, and with reference to the accompanying drawing.

In which:
- Fig. 1: shows a view in oblique projection of the improved or modified storage unit with drawers according to a preferred embodiment of the invention;
- Fig. 2: shows a view in oblique projection of the storage unit with drawers as shown in figure 1 placed in the back of a van;
- Fig. 3: shows an exploded view in oblique projection of the storage unit with drawers according to figures 1 and 2;
- Fig. 4: shows a cross section over the line IV-IV of figure 2;
- Fig. 5: shows a view in oblique projection of the front roller construction also showing the locking bar and the steel pick-up part;
- Fig. 6: shows a longitudinal cross-section and a rear view of the storage unit with drawers, e.g. to show the drawer with the rocker axle with the locking blocks;
- Fig. 7: shows a cross-section over the line VII of figure 5 showing the locking bar, the front roller construction and the pick-up part;
- Fig. 8: shows a view in oblique projection of a specific drawer of the unit equipped with special dividers according to the invention; and
- Fig. 9: shows a view in oblique projection of a narrow storage unit with drawer(s), shown in two of the available heights, with two kinds of top covering, both able to be stacked directly in the cargo space.

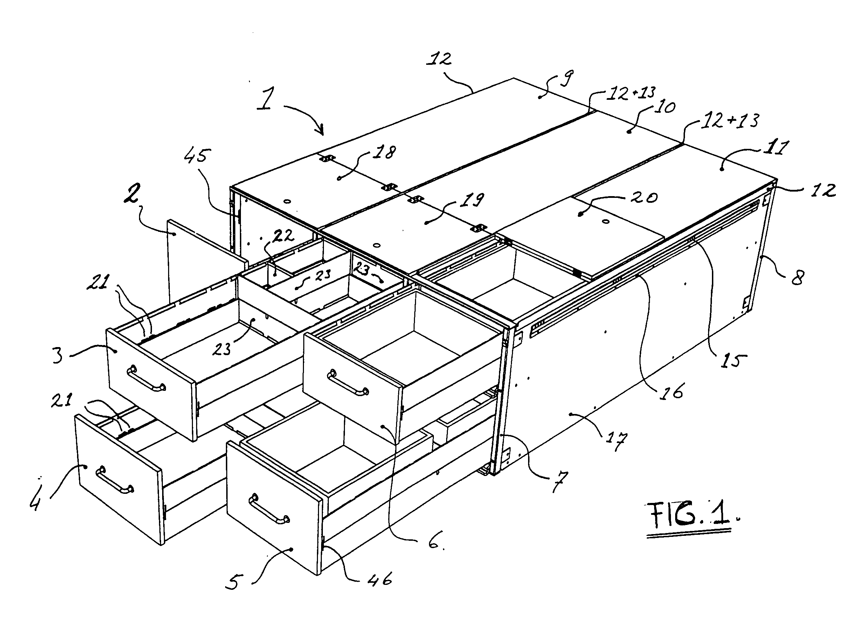

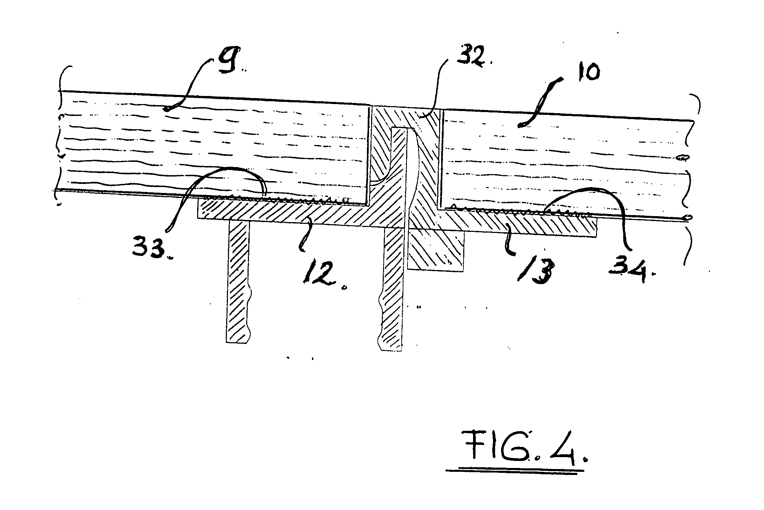

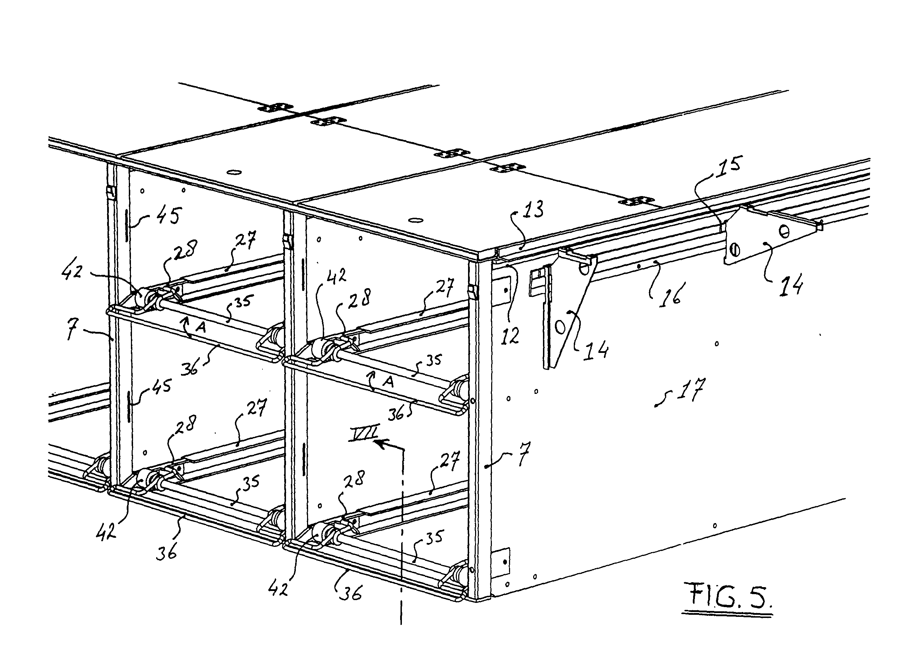

Figure 1 shows a view in oblique projection of the improved or modified storage unit 1 with drawers 2, 3, 4, 5 6. Unit 1 is constructed of portal frames 7 and 8 and the top coverings 9, 10, 11 provided with extrusion profiles at the sides, the so called "chair" profiles 12 and "hook" profiles 13 (figures 4 and 5). Side filler supports 14 (see figures 1, 2 and 5) are hooked into profile 16 provided with slits 15.

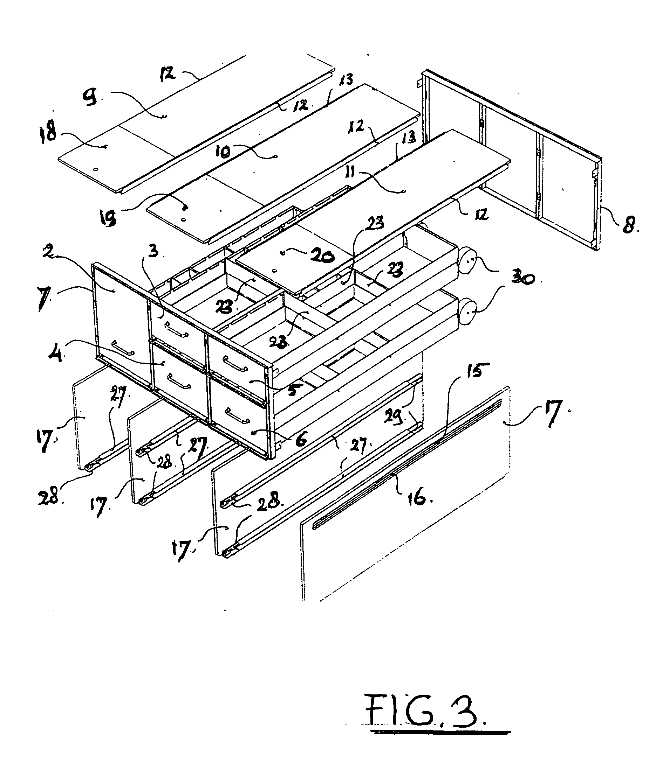

Of the vertical bulkheads 17 (see also figure 3) only a side panel is shown. Top coverings 9, 10, 11 are provided with lids 18, 19, 20 to create an easy access to the back part of drawers 2, 3, 6. The sidewalls of drawers 2, 3, 4, 5, 6 are provided with slits 21 (see also figure 10) for placing special drawer dividers 22, 23. Portal frames 7, 8 are provided with slot holes 45 (see also figures 1, 5 and 9) in those sides of the portal frame uprights which face the drawer sides, in which slot holes 45 are meant for the bolt of an eventually mounted lock, for example, a cylinder lock. Slot holes 45 correspond with slot holes 46, (see also figures 1, 6, 7, 8 and 9) in both side panels of drawers 2, 3, 4, 5, 6.

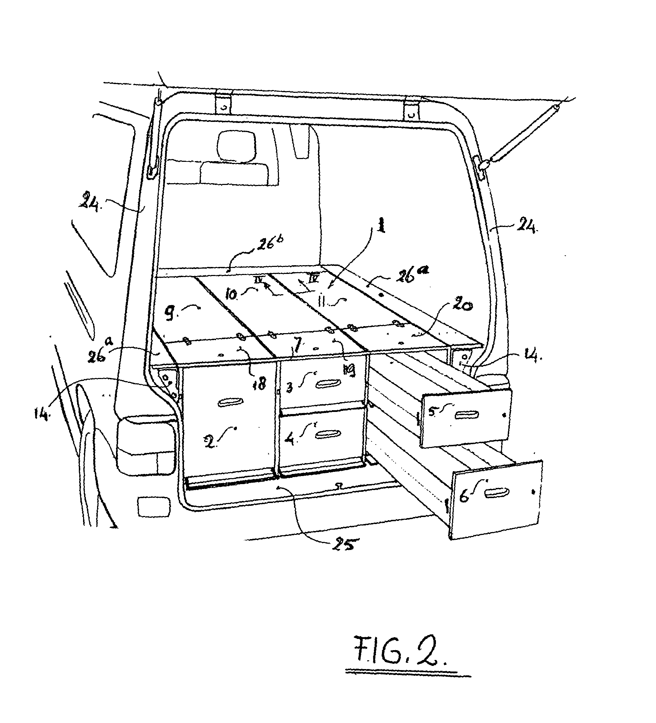

Figure 2 shows a van 24 provided with the unit 1 containing drawers 2, 3, 4, 5, 6 placed on the cargo floor 25. For each identical part identical part numbers are indicated. This embodiment has been provided with side fillers 26 supported by side filler supports 14.

Figure 3 shows an exploded view in oblique projection of unit 1 with drawers 2, 3, 4, 5, 6. The various parts with the identical part numbers as in the other figures are clearly shown. Furthermore, several U-shaped drawer guides 27 mounted to the vertical bulkheads 17 with steel pick-up parts can be seen.

To the opposite side of the guiding rails the steel adjustment pieces 29 are mounted. Besides, the figure shows runner wheels 30 attached to the back of the drawers 2, 3, 4, 5, 6. The separate top covering parts 9, 10, 11 are provided with the extruded "chair" profiles 12 or the "hook" profiles 13, which can also both be seen in cross-section in figure 4 with, for example, top coverings 9, 10 glued on areas 33 and 34. The principle of figure 4 is also applicable for installing side fillers 26a or rear fillers 26b, (see figure 2), and furthermore for mutual connection of several storage systems placed in one and the same van.

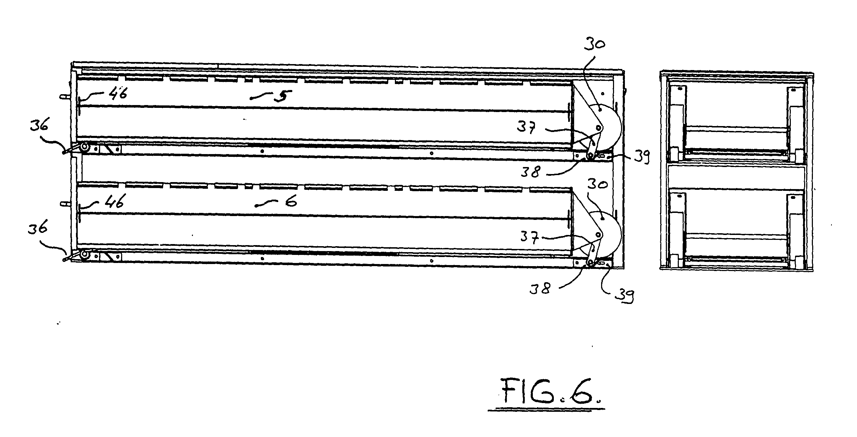

The front roller construction 35 is shown in figure 5 together with the steel pick-up parts 28 to the aluminium extruded U-shaped drawer guides 27. The front roller construction 35 is connected to the locking bar 36 for automatically locking or holding the drawers 2, 3, 4, 5, 6 in several extended positions, (see also figure 6). To release the drawer 2, 3, 4, 5, 6, the locking bar 36 must be lifted in the direction of arrow A.

Figure 6 shows a longitudinal cross-section and a rear view of the storage unit with drawers, e.g. to show the improved drawers 5, 6, with runner wheels 30 coupled to the rocker axle construction 37 with anti tilting wheels 38. This to avoid tilting of a pulled out drawer and yet allowing easy sliding of the drawer.

The whole of drawer 5, 6 stops against stop block 29, in which the locking bar 36 locks the drawer in that position.

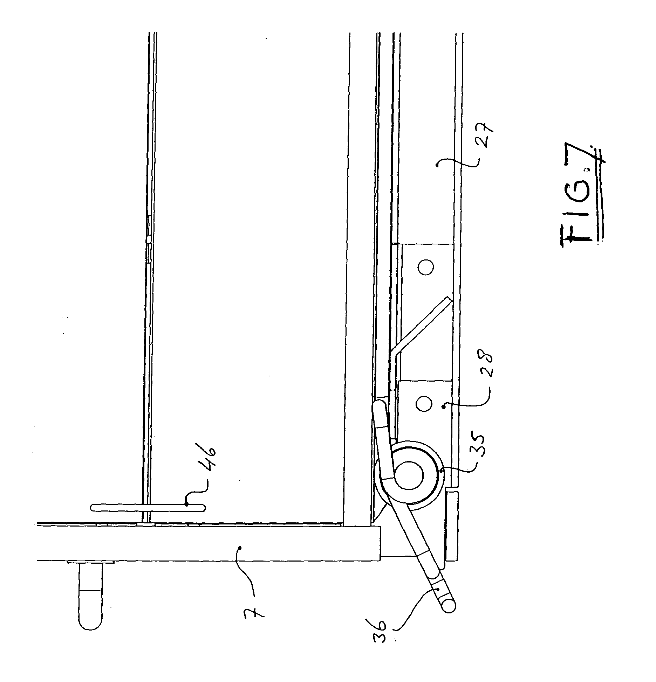

Figure 7 shows a cross-section of locking bar 36, front roller construction 35 and a view of the steel pick-up part 28.

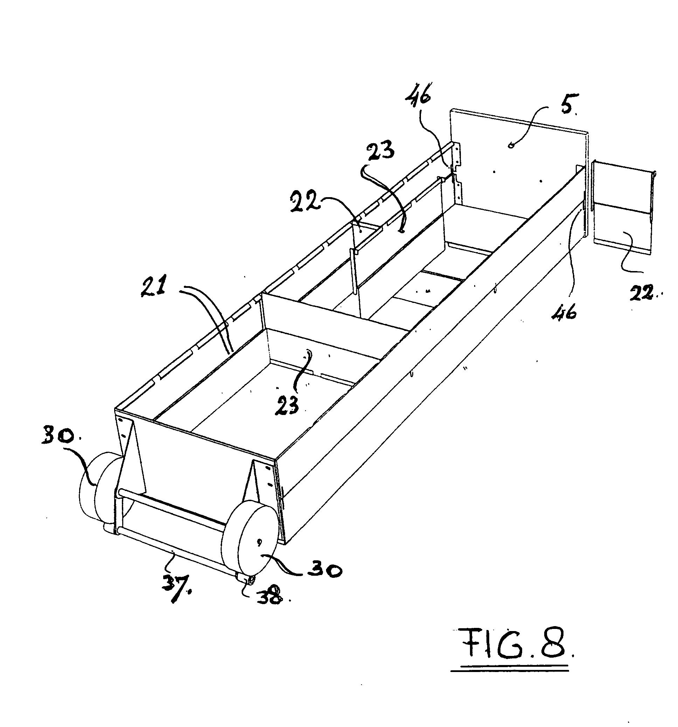

Figure 8 shows a view in oblique projection of a specific embodiment of a drawer of unit 1, here, for example, drawer 5, is provided with special drawer dividers 22, 23. The special drawer dividers 22, 23 are punched out of a single metal sheet and are further pressed or bended in the special shape as shown in figure 8. This way, the desired layout of drawer 5 can be realised very quickly.

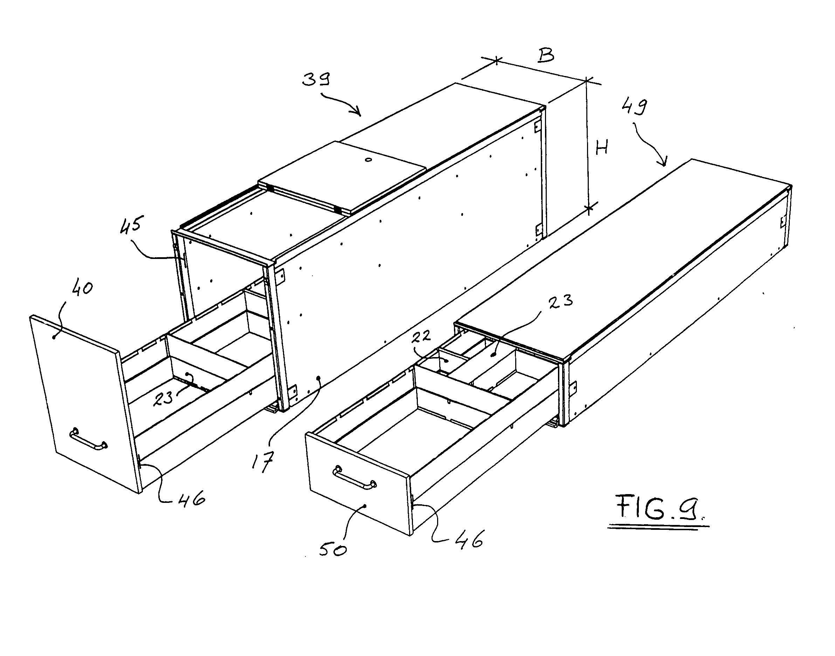

Figure 9 shows a view in oblique projection of a narrow storage unit 39 with drawer 40, which can also be very suitable for camping purposes and the narrow storage unit 49 with drawer 50 is also shown, which is the low build embodiment. Various dimensions are possible, for example, width B can be approximately 41 cm, height H approximately 25 or 54 cm and length L approximately 150 cm.

Finally it has to be emphasized, that the above description constitutes a preferred embodiment of the invention, but that of course further variations and modifications are still possible without departing the scope of this patent document.

## Claims

1. Storage unit executed as special unit with drawers that can be placed on a flat cargo floor of motor vehicles, mostly vans or station cars and such, in which the unit with drawers consist of a dismountable assembly of, in transversal direction placed rectangular portal frames with in between four vertical raised bulkheads in longitudinal direction, in which the sides are equipped with pick-up parts and guiding profiles, in which support roller elements and drawers can be locked or held in several extendable positions, **characterized in that**, the support of the above mentioned drawers (2, 3, 4, 5, 6) in the unit (1) is executed by means of specially constructed guiding profiles (27), steel pick-up parts (28), a front roller construction (35) and rear runner wheels (30) equipped with a rocker axle construction (37) with anti tilting wheels (38), in which locking the drawers (2, 3, 4, 5, 6) can be reached by using the locking bar (36) underneath the drawer front, in which the exact specifications of the different types of construction materials, as used for earlier mentioned guiding profiles (27), pick-up profiles (28), rollers, runner wheels (30), anti tilting wheels (38), and locking bars (36) can be specifically adjusted as regards strength by using metal or plastic.

2. Storage unit as claimed in claim 1, **characterized in that**, on top of the vertical raised bulkheads (17) metal mounting profiles (31, 32) have been clamped for glueing onto the top covering parts (9, 10, 11) for each drawer (2, 3, 6), in which the extrusion profile (31) has an inverted U-shape with an upright rim on one side in order to create a so called "chair" profile.

3. Storage unit as claimed in claims 1 and 2, **characterized in that**, on the side of the storage unit (1) with drawers (2, 3, 4, 5, 6), on the above mentioned extruded "chair" profile (12) an extruded "hook" profile (13) with a glued side filler (26) can be connected and furthermore modified support profile (14) have been attached for rigidly supporting the side filler (26).

4. Storage unit as claimed in claim 1, **characterized in that**, the mentioned guiding profiles (27) are constructed as a U-shaped extrusion profile, in which the back of the U-shape is placed against the sides of the vertical bulkheads (17), in which a steel pick-up part (28) has been equipped with notches and bends for guiding the mentioned rocker axle (37) with anti tilting wheels (38).

5. Storage unit as claimed in claims 1 and 4, **characterized in that**, the mentioned front roller construction (35) consists of a roller with a side limiter (42) on an axle and the whole is rotatable in mentioned steel pick-up part (28).

6. Storage unit as claimed in claims 1, 3 and 4, **characterized in that**, the mentioned rear runners (30) are provided with a coupled rocker axle construction (37) provided with anti tilting wheels (38) to run underneath the flange of mentioned U-shaped guiding profile (27) and mentioned anti tilting wheels (38) stop against the stop block (39) and in which the drawers (2, 3, 4, 5, 6) are securely locked during transport in combination with the locking bar (36).

7. Storage unit as claimed in claim 1, **characterized in that**, the mentioned locking bar (36) is constructed of wire material with an approximate diameter of 6 mm, constructed in such a way that, for sliding out or moving the drawers (2, 3, 4, 5, 6) the locking bar (36) has to be pulled upwards and, when released, the drawers (2, 3, 4, 5, 6) can be locked or held in several extendible positions.

8. Storage unit as claimed in claim 3, **characterized in that**, the mentioned modified supporting profiles (14) can be placed reversible thus protruding at two different distances (see figure 5).

9. Storage unit as claimed in claim 1, **characterized in that**, the lay-out of the drawers (2, 3, 4, 5, 6) has been achieved by using special drawer dividers (22, 23) which lips are put in slits or recesses (21) of the other dividers (22, 23) or the side panels of the drawers (2, 3, 4, 5, 6).

10. Storage unit as claimed in aforementioned claims, **characterized in that**, the storage unit with drawers (40) can also be executed as a single wide unit (39) with dimensions, for example, a width B of approximately 41 cm, a height of approximately 25 or 54 cm and a length of approximately 150 cm.
